(19) Europäisches Patentamt / European Patent Office / Office européen des brevets

(11) **EP 4 408 082 A1**

(12) **EUROPEAN PATENT APPLICATION**
published in accordance with Art. 153(4) EPC

(43) Date of publication:
**31.07.2024 Bulletin 2024/31**

(21) Application number: **22872205.4**

(22) Date of filing: **26.09.2022**

(51) International Patent Classification (IPC):
**H04W 52/14** (2009.01)

(52) Cooperative Patent Classification (CPC):
**H04W 52/14; H04W 72/21; H04W 72/566**

(86) International application number:
**PCT/CN2022/121309**

(87) International publication number:
**WO 2023/046162 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2021 CN 202111130451**

(71) Applicant: **Vivo Mobile Communication Co., Ltd.
Dongguan, Guangdong 523863 (CN)**

(72) Inventors:
- **LI, Na
  Dongguan, Guangdong 523863 (CN)**
- **WANG, Lihui
  Dongguan, Guangdong 523863 (CN)**

(74) Representative: **Murgitroyd & Company
165-169 Scotland Street
Glasgow G5 8PL (GB)**

(54) **CONTROL METHOD AND APPARATUS FOR TRANSMISSION POWER OF PUCCH AND TERMINAL**

(57) This application discloses a method and an apparatus (300) for controlling a power for a PUCCH transmission and a terminal (500), and pertains to the field of wireless communication technologies. Embodiments of this application provide a method for controlling a power for a PUCCH transmission, including: determining (S210), by a terminal (11), first UCI and second UCI multiplexed on one PUCCH for transmission, where a priority of the first UCI is a first priority, a priority of the second UCI is a second priority, and the first priority is higher than the second priority; and determining (S220), by the terminal (11), a power for the PUCCH transmission based on a first bit number, where the first bit number is determined based on a bit number of the first UCI and/or a bit number of the second UCI.

200                                                         S210

```
┌─────────────────────────────────────────────────────────┐
│  A terminal determines first UCI and second UCI          │
│  multiplexed on one PUCCH for transmission               │
└─────────────────────────────────────────────────────────┘
                          │
                          ▼                                 S212
┌─────────────────────────────────────────────────────────┐
│  The terminal determines a power for a PUCCH transmission│
│  based on a first bit number                             │
└─────────────────────────────────────────────────────────┘
```

FIG. 2

EP 4 408 082 A1

**Description**

**CROSS-REFERENCE TO RELATED APPLICATION**

This application claims priority to Chinese Patent Application No. 202111130451.3, filed with the China National Intellectual Property Administration on September 26, 2021 and entitled "METHOD AND APPARATUS FOR CONTROLLING POWER FOR PUCCH TRANSMISSIONAND TERMINAL", which is incorporated herein by reference in its entirety.

**TECHNICAL FIELD**

This application pertains to the field of wireless communication technologies, and specifically relates to a method and an apparatus for controlling a power for a physical uplink control channel (Physical Uplink Control Channel, PUCCH) transmission and a terminal.

**BACKGROUND**

In a new radio (New Radio, NR) system, one piece of user equipment (User Equipment, UE) may support different services, and different services have different service requirements, for example, requirements on delay and reliability. Therefore, a mechanism for marking a priority of a physical uplink control channel (Physical Uplink Control Channel, PUCCH) and/or a physical uplink shared channel (Physical Uplink Shared Channel, PUSCH) is introduced. Specifically, two levels of physical layer priorities are introduced: a high priority and a low priority.

Uplink control information (Uplink Control Information, UCI) is transmitted over a physical uplink control channel (PUCCH). Due to reasons such as start symbol and symbol length, time overlap may occur between different PUCCHs. When PUCCH time-domain resources of different priorities overlap, simply discarding a low-priority PUCCH has a significant impact on the performance of low-priority service transmissions. Therefore, to mitigate the impact on low-priority transmissions, communication systems are required to support multiplexing between PUCCHs of different priorities. For example, when a PUCCH time-domain resource carrying high-priority (High priority, HP) hybrid automatic repeat request acknowledgement (Hybrid automatic repeat request acknowledgement, HARQ-ACK) overlaps a PUCCH time-domain resource carrying low-priority (Low priority, LP) HARQ-ACK and specified conditions are met, user equipment (User Equipment, UE) multiplexes HP HARQ-ACK and LP HARQ-ACK on one PUCCH for transmission. HP HARQ-ACK and LP HARQ-ACK have different requirements on reliability and therefore correspond to different transmission code rates. To be specific, separate coding is required. Similarly, multiplexing of UCIs of different priorities also needs specified timeline requirements to be met.

However, only channels of a same priority can be multiplexed, with one PUCCH resource carrying UCIs of one priority. While performing PUCCH transmission power control, the UE needs to determine a power for the PUCCH transmission based on bits per resource element (Bit Per Resource Element, BPRE). The UE determines the BPRE based on a bit number of to-be-transmitted UCI and the number of resource elements (Resource Element, RE). In the prior art, one PUCCH carries only one BPR. When UCIs of different priorities (for example, LP HARQ-ACK and HP HARQ-ACK) are multiplexed on one PUCCH resource, two code rates may be configured for one PUCCH format, one for low-priority UCI and the other for high-priority UCI. In this case, there is no effective solution yet for the problem of how transmission power of the PUCCH multiplexed with UCIs of different priorities is determined.

**SUMMARY**

Embodiments of this application provide a method and an apparatus for controlling a power for a PUCCH transmission and a terminal, so as to solve the problem of how transmission power of PUCCH multiplexed with UCIs of different priorities is determined.

According to a first aspect, a method for controlling a power for a PUCCH transmission is provided, including: determining, by a terminal, first UCI and second UCI multiplexed on one PUCCH for transmission, where a priority of the first UCI is a first priority, a priority of the second UCI is a second priority, and the first priority is higher than the second priority; and determining, by the terminal, a power for the PUCCH transmission based on a first bit number, where the first bit number is determined based on a bit number of the first UCI and/or a bit number of the second UCI.

According to a second aspect, an apparatus for controlling a power for a PUCCH transmission is provided, including: a first determining module configured to determine first UCI and second UCI multiplexed on one PUCCH for transmission, where a priority of the first UCI is a first priority, a priority of the second UCI is a second priority, and the first priority is higher than the second priority; and a second determining module configured to determine a power for the PUCCH transmission based on a first bit number, where the first bit number is determined based on a bit number of the first UCI and/or a bit number of the second UCI.

According to a third aspect, a terminal is provided. The terminal includes a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communication interface, where the processor is configured to perform the steps of the method according to the first aspect, and the communication interface is configured to communicate with other communication devices.

According to a fifth aspect, a readable storage medium is provided. A program or instructions are stored in the readable storage medium, and when the program or instructions are executed by a processor, the steps of the method according to the first aspect are implemented.

According to a sixth aspect, a chip is provided. The chip includes a processor and a communication interface, where the communication interface is coupled to the processor, and the processor is configured to run a program or instructions to implement the steps of the method according to the first aspect.

According to a seventh aspect, a computer program/program product is provided. The computer program/program product is stored in a non-transient storage medium, and the program/program product is executed by at least one processor to implement the steps of the method according to the first aspect.

In the embodiments of this application, the terminal determines the first UCI and the second UCI of different priorities that are multiplexed on one PUCCH for transmission and determines the power for the PUCCH transmission based on the bit number of the first UCI and/or the second UCI, thereby solving the problem of how transmission power of the PUCCH multiplexed with UCIs of different priorities is determined.

## BRIEF DESCRIPTION OF DRAWINGS

FIG. 1 is a schematic diagram of a wireless communication system to which an embodiment of this application is applicable;

FIG. 2 is a schematic flowchart of a method for controlling a power for a PUCCH transmission according to an embodiment of this application;

FIG. 3 is a schematic structural diagram of an apparatus for controlling a power for a PUCCH transmission according to an embodiment of this application;

FIG. 4 is a schematic structural diagram of a communication device according to an embodiment of this application; and

FIG. 5 is a schematic diagram of a hardware structure of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish between objects of a same type and do not limit the quantity of objects. For example, there may be one or more first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation

(6th Generation, 6G) communication system.

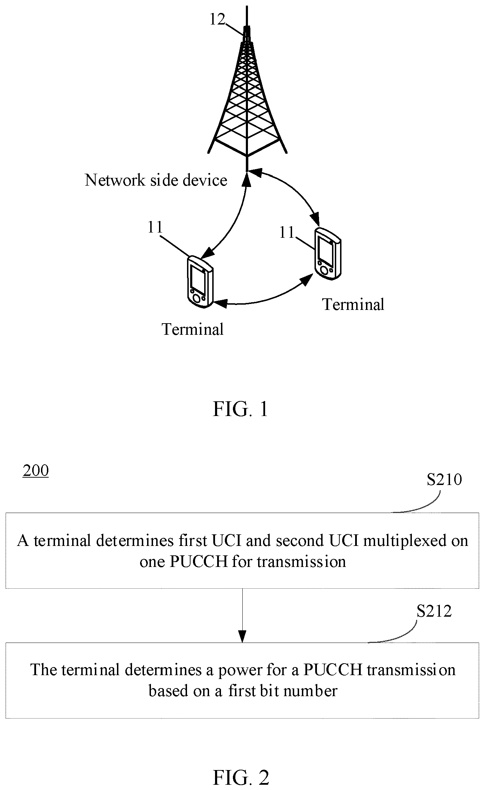

FIG. 1 is a schematic diagram of a wireless communication system to which an embodiment of this application is applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a smart watch, a wrist band, earphones, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, but the specific type of the base station is not limited.

The following describes in detail the methods for controlling a power for a PUCCH transmission provided in the embodiments of this application by using some embodiments and application scenarios thereof with reference to the accompanying drawings.

FIG. 2 is a schematic flowchart of a method for controlling a power for a PUCCH transmission according to an embodiment of this application. The method 200 may be performed by a terminal. In other words, the method may be performed by software or hardware installed on the terminal. As shown in FIG. 2, the method may include the following steps.

S210. The terminal determines first UCI and second UCI multiplexed on one PUCCH for transmission.

A priority of the first UCI is a first priority, a priority of the second UCI is a second priority, and the first priority is higher than the second priority. In other words, the first UCI is high-priority UCI, and the second UCI is low-priority UCI.

In this embodiment of this application, the priority can be represented by a priority index. For example, a priority index corresponding to the first priority (or a high priority) is 1, and a priority index corresponding to the second priority (or a low priority) is 0. Different priorities may also be represented by different priority indexes.

For example, in a case that there is a conflict between transmission resources of a PUCCH for transmitting the first UCI and a PUCCH for transmitting the first UCI, the first UCI and the second UCI need to be multiplexed on a PUCCH for transmission.

S220. The terminal determines a power for a PUCCH transmission based on a first bit number, where the first bit number is determined based on a bit number of the first UCI and/or a bit number of the second UCI.

In a possible implementation, in S220, the terminal may determine a PUCCH transmission power adjustment factor for the PUCCH based on the first bit number and then determine the power for the PUCCH transmission based on the PUCCH transmission power adjustment factor.

For example, the terminal may first determine a PUCCH transmission power adjustment factor $\Delta_{TF,b,f,c}(i)$ on BWP b of a carrier f of a PUCCH cell c (for example, a primary cell PCell, a primary secondary cell PScell, and a PUCCH secondary cell SCell) and then determines the power for the PUCCH transmission based on the PUCCH transmission power adjustment factor $\Delta_{TF,b,f,c}(i)$.

Different PUCCH formats correspond to different channel structures, different numbers of bits of UCI allowed to be carried, and the like. For example, PUCCH format 0 and PUCCH format 1 can carry only 1 or 2 bits of UCI, while PUCCH format 2, PUCCH format 3, and PUCCH format 4 carry more than 2 bits of UCI. Therefore, in this embodiment of this application, different PUCCH transmission power adjustment factor determination methods are provided for different PUCCH formats.

In a possible implementation, a format of the PUCCH includes one of the following: PUCCH format 2, PUCCH format 3, and PUCCH format 4.

In this possible implementation, optionally, the determining, by the terminal, a PUCCH transmission power adjustment factor based on a first bit number may include: in a case that the first bit number is less than or equal to a threshold, determining, by the terminal, the PUCCH transmission power adjustment factor $\Delta_{TF,b,f,c}(i)$ in the following manner:

$$\Delta_{TF,b,f,c}(i) = 10log_{10}\left(K_1 \cdot \left(n_{HARQ-ACK}(i) + O_{SR}(i) + O_{CSI}(i)\right)/N_{RE}(i)\right) \quad (1) \qquad ,$$

where

in the formula (1), $K_1$ is a first predetermined value, for example, $K_1=11$.

In the formula (1), $n_{HARQ-ACK}(i)$ is a second bit number, where the second bit number is determined based on a bit number of first HARQ-ACK of the first priority transmitted over the PUCCH and/or a bit number of second HARQ-ACK of the second priority transmitted over the PUCCH, to be specific, the second bit number is determined based on a bit number of a high-priority first HARQ-ACK and/or a bit number of a low-priority second HARQ-ACK transmitted over the PUCCH.

For example, the second bit number $n_{HARQ-ACK}(i)$ can be determined in the following manner:

$$\alpha_1 \cdot n_{HARQ-ACK}^{HP} + \beta_1 \cdot n_{HARQ-ACK}^{LP} \quad (2),$$

where $n_{HARQ-ACK}^{HP}$ is the bit number of the first HARQ-ACK, $n_{HARQ-ACK}^{LP}$ is the bit number of the second HARQ-ACK, $0\leq\alpha_1\leq1$, and $0\leq\beta_1\leq1$.

In specific application, the second bit number may be determined based only on the bit number of the second HARQ-ACK, that is, $\alpha_1=0$ and $\beta_1=1$. Alternatively, the second bit number may be determined based only on the bit number of the first HARQ-ACK, that is, $\alpha_1=1$ and $\beta_1=0$. Alternatively, a sum of bit numbers of HP HARQ-ACK and LP HARQ-ACK that are carried on the PUCCH may be used as the second bit number, that is, $\alpha_1=1$ and $\beta_1=1$. Alternatively, values of $\alpha_1$ and $\beta_1$ may be set based on specific application, which are not specifically limited in this embodiment of this application.

The bit number $n_{HARQ-ACK}^{HP}$ of the first HARQ-ACK may be determined in the following manner.

(1) In a case that no HARQ-ACK codebook is configured for the HARQ-ACK of the first priority of the terminal and the first HARQ-ACK is transmitted over the PUCCH, $n_{HARQ-ACK}^{HP}=1$.

For example, in a case that none of *pdsch-HARQ-ACK-Codebook, pdsch-HARQ-ACK-Codebook-r16, pdsch-HARQ-ACK-OneShotFeedback,* and Triggering HARQ-ACKretx is configured for high-priority (High Priority, HP) HARQ-ACK of the UE, and the HP HARQ-ACK is transmitted over the PUCCH by the UE, $n_{HARQ-ACK}^{HP}=1$.

(2) In a case that no first HARQ-ACK is transmitted over the PUCCH, $n_{HARQ-ACK}^{HP}=0$.

To be specific, no matter whether a HARQ-ACK codebook is configured for the HARQ-ACK of the first priority of the terminal, $n_{HARQ-ACK}^{HP}$ is 0 provided that no first HARQ-ACK is transmitted over the PUCCH.

For example, in a case that none of *pdsch-HARQ-ACK-Codebook, pdsch-HARQ-ACK-Codebook-r 16, pdsch-HARQ-ACK-OneShotFeedback,* and Triggering HARQ-ACKretx is configured for the HP HARQ-ACK of the UE, and no HP HARQ-ACK is transmitted over the PUCCH by the UE, $n_{HARQ-ACK}^{HP}=0$.

(3) In a case that a HARQ-ACK codebook is configured for the HARQ-ACK of the first priority of the terminal and the first HARQ-ACK is transmitted over the PUCCH, $n_{HARQ-ACK}^{HP}$ is the bit number of the first HARQ-ACK determined in a predetermined manner.

For example, in a case that a HARQ-ACK codebook is configured for the HP HARQ-ACK of the UE and the HARQ-ACK codebook configured is a type (type)1 codebook, an (enhanced) type2 codebook, or an (enhanced) type3 codebook, a bit number of the HP HARQ-ACK may be determined in a corresponding manner.

The bit number $n_{HARQ-ACK}^{LP}$ of the second HARQ-ACK may be determined in the following manner.

(1) In a case that no HARQ-ACK codebook is configured for the HARQ-ACK of the second priority of the terminal and the second HARQ-ACK is transmitted over the PUCCH, $n_{HARQ-ACK}^{LP}=1$.

For example, in a case that none of *pdsch-HARQ-ACK-Codebook, pdsch-HARQ-ACK-Codebook-r16, pdsch-HARQ-ACK-OneShotFeedback,* and Triggering HARQ-ACKretx is configured for low-priority (Low Priority, LP) HARQ-ACK of the UE, and the LP HARQ-ACK is transmitted over the PUCCH by the UE, $n_{HARQ-ACK}^{LP}=1$ .

(2) In a case that no second HARQ-ACK is transmitted over the PUCCH, $n_{HARQ-ACK}^{LP}=0$ . To be specific, no matter whether a HARQ-ACK codebook is configured for the HARQ-ACK of the second priority of the terminal, $n_{HARQ-ACK}^{LP}$ is 0 provided that no second HARQ-ACK is transmitted over the PUCCH.

For example, in a case that none of *pdsch-HARQ-ACK-Codebook, pdsch-HARQ-ACK-Codebook-r16, pdsch-HARQ-ACK-OneShotFeedback,* and Triggering HARQ-ACKretx is configured for the LP HARQ-ACK of the UE, and no LP HARQ-ACK is transmitted in the PUCCH transmission, $n_{HARQ-ACK}^{LP}=0$ .

(3) In a case that a HARQ-ACK codebook is configured for the HARQ-ACK of the second priority of the terminal and the second HARQ-ACK is transmitted over the PUCCH, $n_{HARQ-ACK}^{LP}$ is the bit number of the second HARQ-ACK determined in a predetermined manner.

For example, in a case that a HARQ-ACK codebook is configured for the LP HARQ-ACK of the UE and the HARQ-ACK codebook configured is a type (type)1 codebook, a type2 codebook, or a type3 codebook, a bit number of the LP HARQ-ACK may be determined in a corresponding manner.

In the formula (1), $O_{SR}(i)$ is a third bit number, where the third bit number is determined based on a bit number of a first scheduling request (Scheduling Request, SR) of the first priority transmitted over the PUCCH and/or a bit number of a second SR of the second priority transmitted over the PUCCH. To be specific, the third bit number is determined based on the bit number of the high-priority first SR and/or low-priority second SR transmitted over the PUCCH.

Optionally, $O_{SR}(i)$ may be

$$\alpha_3 \cdot n_{SR}^{HP} + \beta_3 \cdot n_{SR}^{LP} \quad (3),$$

where $n_{SR}^{HP}$ is the bit number of the first SR of the first priority, $n_{SR}^{LP}$ is the bit number of the second SR of the second priority, $0 \le \alpha_3 \le 1$, and $0 \le \beta_3 \le 1$. Optionally, values of $\alpha_3$ and $\beta_3$ may be respectively the same as or different from $\alpha_1$ and $\beta_1$ in the formula (2). This is not specifically limited in this embodiment of this application.

In the formula (1), $O_{CSI}(i)$ is a fourth bit number, where the fourth bit number is determined based on a bit number of first channel state information (Channel State Information, CSI) of the first priority transmitted over the PUCCH and/or a bit number of second CSI of the second priority transmitted over the PUCCH. To be specific, the fourth bit number is determined based on the high-priority first CSI and/or low-priority second CSI transmitted over the PUCCH.

Optionally, the fourth bit number $O_{CSI}(i)$ may be:

$$\alpha_4 \cdot n_{CSI}^{HP} + \beta_4 \cdot n_{CSI}^{LP} \quad (4),$$

where $n_{CSI}^{HP}$ is the bit number of the first CSI of the first priority, $n_{CSI}^{LP}$ is the bit number of the second CSI of the second priority, $0 \le \alpha_4 \le 1$, and $0 \le \beta_4 \le 1$. Optionally, values of $\alpha_4$ and $\beta_4$ may be respectively the same as or different from $\alpha_1$ and $\beta_1$ in the formula (2). This is not specifically limited in this embodiment of this application.

In the formula (1), $N_{RE}(i)$ is the number of first REs, where the number of first REs is determined based on the number of resource elements (Resource Element, RE) occupied by the first UCI and/or the number of REs occupied by the second UCI.

For example, $N_{RE}(i)$ is the number of REs occupied by the HP UCI carried on the PUCCH, the number of REs occupied by the LP UCI carried on the PUCCH, or a total number of REs occupied by the HP UCI and the LP UCI. For example, $N_{RE}(i) = M_{RB,b,f,c}^{PUCCH}(i) \cdot N_{SC,ctrl}^{RB}(i) \cdot N_{symb-UCI,b,f,c}^{PUCCH}(i)$ , where $M_{RB,b,f,c}^{PUCCH}(i)$ is a PUCCH transmission bandwidth, that is, a PRB number; $N_{SC,ctrl}^{RB}(i)$ is the number of sub-carriers other than sub-carriers occupied by demodulation reference signals (Demodulation Reference Signal, DMRS) in each RB, and a specific value is related to a format of the PUCCH. For example, for PUCCH format 2, $N_{sc,ctrl}^{RB} = N_{sc}^{RB} - 4$, or $N_{sc,ctrl}^{RB} = (N_{sc}^{RB} - 4)/N_{SF}^{PUCCH,2}$ if PUCCH format 2 includes an orthogonal cover code (orthogonal cover code, OCC) with a length of $N_{SF}^{PUCCH,2}$; and for PUCCH format 3, $N_{sc,ctrl}^{RB} = N_{sc}^{RB}$ or $N_{sc,ctrl}^{RB} = N_{sc}^{RB}/N_{SF}^{PUCCH,3}$ if PUCCH format 3 includes an OCC with a length of $N_{SF}^{PUCCH,3}$. $N_{sc}^{RB}$ represents the number of sub-carriers in each RB, for example, 12. $N_{symb-UCI,b,f,c}^{PUCCH}(i)$ represents the number of OFDM symbols in the PUCCH or the number of symbols other than symbols used by DMRS. Specifically, for PUCCH format 2, $N_{symb-UCI,b,f,c}^{PUCCH}(i)$ is equal to the number of symbols occupied by the PUCCH format 2; and for PUCCH format 3, $N_{symb-UCI,b,f,c}^{PUCCH}(i)$ is equal to the number of symbols occupied by PUCCH format 3 minus the number of the symbols other than the symbols occupied by DMRS, that is, the number of symbols occupied by the UCI. Alternatively, the number of first REs $N_{RE}(i)$ may be a weighted value of the number of REs occupied by the first UCI and the number of REs occupied by the second UCI, for example, $\alpha_5 \cdot N_{RE}^{HP}(i) + \beta_5 \cdot N_{RE}^{LP}(i)$, where $N_{RE}^{HP}(i)$ is the number of REs occupied by the first UCI, $N_{RE}^{HLP}(i)$ is the number of REs occupied by the second UCI, $0 \le \alpha_5 \le 1$, and $0 \le \beta_5 \le 1$. Values of $\alpha_5$ and $\beta_5$ may be respectively the same as or different from $\alpha_1$ and $\beta_1$ in the formula (2).

In a case that the format of the PUCCH is PUCCH format 2, PUCCH format 3 or PUCCH format 4, the determining, by the terminal, a PUCCH transmission power adjustment factor based on the first bit number may include: in a case that the first bit number is greater than a threshold, determining, by the terminal, the PUCCH transmission power adjustment factor $\Delta_{TF,b,f,c}(i)$ in the following manner:

$$\Delta_{TF,b,f,c}(i) = 10\log_{10}\left(2^{K_2 \cdot BPRE(i)} - 1\right) \quad (5),$$

where $K_2$ is a second predetermined value, for example, $K_2 = 2.4$.
In the formula (5),

$$BPRE(i) = \left(O_{ACK}(i) + O_{SR}(i) + O_{CSI}(i) + O_{CRC}(i)\right)/N_{RE}(i).$$

$O_{ACK}(i)$ is a second bit number, where the second bit number is determined based on a bit number of first HARQ-ACK of the first priority transmitted over the PUCCH and/or a bit number of second HARQ-ACK of the second priority transmitted over the PUCCH, and may be specifically determined with reference to the determination manner of the second bit number $n_{HARQ-ACK}(i)$ in the formula (1).
$O_{SR}(i)$ is a third bit number, where the third bit number is determined based on a bit number of first SR of the first priority transmitted over the PUCCH and/or a bit number of second SR of the second priority transmitted over the PUCCH, and may be specifically determined with reference to the determination manner of the third bit number $O_{SR}(i)$ in the formula (1).
$O_{CSI}(i)$ is a fourth bit number, where the fourth bit number is determined based on a bit number of first channel state information CSI of the first priority transmitted over the PUCCH and/or a bit number of second CSI of the second priority transmitted over the PUCCH, and may be specifically determined with reference to the determination manner of the fourth bit number $O_{CSI}(i)$ in the formula (1).
$O_{CRC}(i)$ is a fifth bit number, where the fifth bit number is determined based on a bit number of first cyclic redundancy check (Cyclic redundancy check, CRC) of the first priority transmitted over the PUCCH and/or a bit number of second CRC of the second priority transmitted over the PUCCH.
For example, the fifth bit number $O_{CRC}(i)$ may be:

$$\alpha_2 \cdot n_{CRC}^{HP} + \beta_2 \cdot n_{CRC}^{LP} \quad (6),$$

where $n_{CRC}^{HP}$ is the bit number of the first CRC, $n_{CRC}^{LP}$ is the bit number of the second CRC, $0 \leq \alpha_2 \leq 1$, and $0 \leq \beta_2 \leq 1$. Optionally, values of $\alpha_2$ and $\beta_2$ may be respectively the same as or different from $\alpha_1$ and $\beta_1$ in the formula (2). This is not specifically limited in this embodiment of this application.

$N_{RE}(i)$ is the number of first REs, where the number of first REs is determined based on the number of REs occupied by the first UCI and/or the number of REs occupied by the second UCI. For example, $N_{RE}(i)$ is the number of REs occupied by the HP UCI carried on the PUCCH, the number of REs occupied by the LP UCI carried on the PUCCH, or a total number of REs occupied by the HP UCI and the LP UCI, for example, $N_{RE}(i) = M_{RB,b,f,c}^{PUCCH}(i) \cdot N_{SC,ctrl}^{RB}(i) \cdot N_{symb-UCI,b,f,c}^{PUCCH}(i)$, where $M_{RB,b,f,c}^{PUCCH}(i)$ is a PUCCH transmission bandwidth, $N_{SC,ctrl}^{RB}(i)$ is the number of sub-carriers other than sub-carriers occupied by a demodulation reference signal (Demodulation Reference Signal, DMRS) in each RB, and $N_{symb-UCI,b,f,c}^{PUCCH}(i)$ is the number of symbols other than symbols used by the DMRS in the PUCCH. Alternatively, $N_{RE}(i)$ represents the number of weighted (or effective) REs occupied by the UCI, for example, $\alpha_5 \cdot N_{RE}^{HP}(i) + \beta_5 \cdot N_{RE}^{LP}(i)$, where $N_{RE}^{HP}(i)$ is the number of REs occupied by the first UCI, $N_{RE}^{LP}(i)$ is the number of REs occupied by the second UCI, $0 \leq \alpha_5 \leq 1$, and $0 \leq \beta_5 \leq 1$.

In another possible implementation, the format of the PUCCH includes one of the following: PUCCH format 0 and PUCCH format 1.

In this possible implementation, optionally, the terminal can determine the PUCCH transmission power adjustment factor $\Delta_{TF,b,f,c}(i)$ in the following manner:

$$\Delta_{TF,b,f,c}(i) = 10 log_{10}\left(\frac{N_{ref}^{PUCCH}}{N_{symb}^{PUCCH}(i)}\right) + \Delta_{UCI}(i) \quad (7).$$

In the formula (7), $N_{symb}^{PUCCH}(i)$ is the number of symbols transmitted over the PUCCH.

In a case that the format of the PUCCH is PUCCH format 0, $N_{ref}^{PUCCH} =$ Third predetermined value, and in a case that the format of the PUCCH is PUCCH format 1, $N_{ref}^{PUCCH} = N_{symb}^{slot}$, and $N_{symb}^{slot}$ is the number of symbols in one slot, where the third predetermined value may be 2.

In a case that the format of the PUCCH is PUCCH format 0, $\Delta_{UCI}(i) = 0$; and in a case that the format of the PUCCH is PUCCH format 1, $\Delta_{UCI}(i) = 10 log_{10}(O_{UCI}(i))$, where $O_{UCI}(i)$ is the first bit number, that is, $O_{UCI}(i)$ may be determined based on the bit number of the first UCI and/or the bit number of the second UCI.

In this embodiment of this application, optionally, the first bit number may be: $\alpha_6 \cdot n_{UCI}^{HP} + \beta_6 \cdot n_{UCI}^{LP}$, where $n_{UCI}^{HP}$ is the bit number of the first UCI, $n_{UCI}^{LP}$ is the bit number of the second UCI, $0 \leq \alpha_6 \leq 1$, and $0 \leq \beta_6 \leq 1$.

For example, the first bit number may be determined based only on the bit number of the second UCI, that is, $\alpha_6 = 0$ and $\beta_6 = 1$. Alternatively, the first bit number may be determined based only on the bit number of the first UCI, that is, $\alpha_6 = 1$, and $\beta_6 = 0$. Alternatively, a sum of bit numbers of the first UCI and the second UCI that are carried on the PUCCH may be used as the first bit number, that is, $\alpha_6 = 1$ and $\beta_6 = 1$. Alternatively, values of $\alpha_6$ and $\beta_6$ may be set based on specific application, which are not specifically limited in this embodiment of this application.

In addition, in this embodiment of this application, $\alpha_1$ to $\alpha_6$ may be the same or different, $\beta_1$ to $\beta_6$ may be the same or different, and $\alpha_1$ to $\alpha_6$ and $\beta_1$ to $\beta_6$ may be prescribed by a protocol, configured by a higher layer parameter, indicated by the DCI, or determined based on a pre-definition rule, for example, determined based on code rates of the HP UCI and the LP UCI. Optionally, $\alpha_1 = \alpha_2 = \alpha_3 = \alpha_4 = \alpha_5$, $\beta_1 = \beta_2 = \beta_3 = \beta_4 = \beta_5$, $\alpha_6 = 1$, $\beta_6 = R_{LP-UCI}/R_{HP-UCI}$, where $R_{LP-UCI}$ and $R_{HP-UCI}$ respectively represent code rates corresponding to the LP UCI and the HP UCI. Alternatively, $\alpha_1 = \alpha_2 = \alpha_3 = \alpha_4 = \alpha_5 = 1$ and $\beta_1 = \beta_2 = \beta_3 = \beta_4 = \beta_S = 0$, or $\alpha_1 = \alpha_2 = \alpha_3 = \alpha_4 = \alpha_5 = 0$ and $\beta_1 = \beta_2 = \beta_3 = \beta_4 = \beta_5 = 1$.

After the PUCCH transmission power adjustment factor $\Delta_{TF,b,f,c}(i)$ is determined, the power for the PUCCH transmission can be determined based on the PUCCH transmission power adjustment factor $\Delta_{TF,b,f,c}(i)$.

For example, if the UE transmits one PUCCH in PUCCH format 2 or PUCCH format 3, this PUCCH carries $O_{LP\text{-}ACK}$ LP HARQ-ACK information bits, with $O_{CRC}^{LP-ACK}$ CRC bits, and $O_{HP\text{-}ACK}$ HP HARQ-ACK information bits, with $O_{CRC}^{HP-ACK}$ CRC bits. In this case, the UE can determine that the transmission power of an i-th transmission occasion of this PUCCH (on BWP b of a carrier f of a cell c of this PUCCH) is $P_{PUCCH,b,f,c}(i,\,q_u,\,q_d,\,l)dBm$.

$$P_{PUCCH,b,f,c}(i, q_u, q_d, l) =$$
$$\begin{cases} P_{CMAX,f,c}(i) \\ P_{O-PUCCH,b,f,c}(q_u) + 10log_{10}\left(2^{\mu} \cdot M_{RB,b,f,c}^{PUCCH}(i) + PL_{b,f,c}(q_d) + \Delta_{F-PUCCH}(F) + \Delta_{TF,b,f,c}(i) + g_{b,f,c}(i,l)\right) \end{cases},$$

where

$i$ represents a transmission time, that is, a PUCCH transmission occasion;
$q_d$ represents a path loss calculation basis reference signal identifier;
$l$ represents a closed loop power control process identifier;
$P_{CMAX,f,c}(i)$ represents a maximum transmission power;
$P_{O\_PUCCH,b,f,c}(q_u)$ is a sum of $P_{O\_NOMINAL\_PUCCH}$ and $P_{O\_UE\_PUCCH}(q_u)$, where $P_{O\_NOMINAL\_PUCCH}$ and $P_{O\_UE\_PUCCH}(q_u)$ are configured or pre-defined by a higher layer parameter;
$M_{RB,b,f,c}^{PUCCH}(i)$ represents a PUCCH transmission bandwidth;
$PL_{b,f,c}(q_d)$ represents an estimated path loss value;
$\Delta_{F\_PUCCH}(F)$ represents a power compensation amount associated with the format of the PUCCH;
$\Delta_{TF,b,f,c}(i)$ represents a power compensation amount associated with the format of the PUCCH and the bit number of the UCI, that is, the foregoing PUCCH transmission power adjustment factor; and
$g_{b,f,c}(i, l)$ represents a closed loop power control adjustment amount. Closed loop power control may be a transmission power control (Transmission power Control, TPC) command in downlink control information (Downlink Control Information, DCI) for scheduling the PUCCH or a TPC command provided in DCI 2_2 scrambled with PTC-PUCCH-RNTI.

$\Delta_{TF,b,f,c}()$ may be determined in the following manners.

Manner 1:

(1) If the bit number of the HP UCI carried on the PUCCH is less than or equal to 11,

$$\Delta_{TF,b,f,c}(i) = 10log_{10}\left(K_1 \cdot \left(n_{HARQ-ACK}(i) + O_{SR}(i) + O_{CSI}(i)\right)/N_{RE}(i)\right),$$

where

$K_1=6$;
$n_{HARQ\text{-}ACK}(i)$ represents the bit number of HP HARQ-ACK, and for a type 1, type 2, or type 3 code book, $n_{HARQ\text{-}ACK}(i)$ may be the bit number of the HP HARQ-ACK determined in a specified manner; if HP HARQ-ACK of the UE is not configured with any one of *pdsch-HARQ ACK Codebook, pdsch-HARQACKCodebook-r 16, pdsch-HARQ-ACK-OneShotFeedback,* and Triggering HARQ-ACKretx, $n_{HARQ\text{-}ACK}(i) = 1$;
$O_{SR}(i)$ represents the bit number of the HP SR carried on the PUCCH;
$O_{CSI}(i)$ represents the bit number of the HP CSI carried on the PUCCH, and if no HP CSI is carried on the PUCCH, $O_{CSI}(i) = 0$; and
$N_{RE}(i)$ represents the number of REs occupied by the HP UCI.

(2) If the bit number of the HP UCI carried on the PUCCH is greater than 11, $\Delta_{TF,b,f,c}(i) = 10log_{10}(2^{K2 \cdot BPRE(i)}$ -

1), where

K$_2$=2.4; and

BPRE($i$) = ($O_{ACK}$($i$) + $O_{SR}$($i$) + $O_{CSI}$($i$) + $O_{CRC}$($i$)/$N_{RE}$($i$), where $O_{ACK}$($i$) represents the bit number of the HP HARQ-ACK, and for a type 1, type 2, or type 3 code book, $O_{ACK}$($i$) may be the bit number of the HP HARQ-ACK determined in a specified manner, and if the HP HARQ-ACK of the UE is not configured with any one of *pdsch-HARQ-ACK-Codebook, pdsch-HARQ-ACK-Codebook-r16, pdsch-HARQ-ACK-OneShotFeedback,* and Triggering HARQ-ACKretx, $O_{ACK}$($i$) = 1; $O_{SR}$($i$) represents the bit number of the HP SR; $O_{CSI}$($i$) represents the bit number of the HP CSI, and if there is no HP CSI, $O_{CSI}$($i$) = 0; and $N_{RE}$($i$) represents the number of REs occupied by the HP UCI.

Manner 2:

(1) If the bit number of the LP UCI carried on the PUCCH is less than or equal to 11,

$$\Delta_{TF,b,f,c}(i) = 10log_{10}\left(K_1 \cdot \left(n_{HARQ-ACK}(i) + O_{SR}(i) + O_{CSI}(i)\right)/N_{RE}(i)\right),$$

where

K$_1$=6;

$n_{HARQ-ACK}$($i$) represents the bit number of the LP HARQ-ACK, and for a type 1, type 2, or type 3 code book, $n_{HARQ-ACK}$($i$) may be the bit number of the LP HARQ-ACK determined in a specified manner; if the LP HARQ-ACK of the UE is not configured with any one of *pdsch-HARQ-ACK-Codebook, pdsch-HARQ-ACK-Codebook-r16, pdsch-HARQ-ACK-OneShotFeedback,* and Triggering HARQ-ACKretx, $n_{HARQ-ACK}$($i$) = 1; $O_{SR}$($i$) represents the bit number of the LP SR carried on the PUCCH; $O_{CSI}$($i$) represents the bit number of the LP CSI carried on the PUCCH, and if no LP CSI is carried on the PUCCH, $O_{CSI}$($i$) = 0; and $N_{RE}$($i$) represents the number of REs occupied by the LP UCI.

(2) If the bit number of the LP UCI carried on the PUCCH is greater than 11, $\Delta_{TF,b,f,c}$($i$) = 10$log_{10}$($2^{K2 \cdot BPRE(i)}$ - 1), where

K$_2$=2.4; and

BPRE($i$) = ($O_{ACK}$($i$) + $O_{SR}$($i$) + $O_{CSI}$($i$) + $O_{CRC}$($i$)/$N_{RE}$($i$), where $O_{ACK}$($i$) represents the bit number of the LP HARQ-ACK, and for a type 1, type 2, or type 3 code book, $O_{ACK}$($i$) may be the bit number of the LP HARQ-ACK determined in a specified manner, and if the LP HARQ-ACK of the UE is not configured with any one of *pdsch-HARQ ACK Codebook, pdsch-HARQ-ACK-Codebook-r16, pdsch-HARQ-ACK-OneShotFeedback,* and Triggering HARQ-ACKretx, $O_{ACK}$($i$) = 1; $O_{SR}$($i$) represents the bit number of the HP SR; $O_{CSI}$($i$) represents the bit number of the HP CSI, and if there is no LP CSI, $O_{CSI}$($i$) = 0; and $N_{RE}$($i$) represents the number of REs occupied by the LP UCI.

Manner 3:

(1) If a total bit number of the HP UCI and LP UCI carried on the PUCCH is less than or equal to 11, $\Delta_{TF,b,f,c}$() = 10$log_{10}$($K_1 \cdot$($n_{HARQ-ACK}$($i$) + $O_{SR}$($i$) + $O_{CSI}$($i$))/$N_{RE}$($i$)), where

K$_1$=6;

$n_{HARQ-ACK}$($i$) represents a total bit number of the HP HARQ-ACK and the LP HARQ-ACK, and for a type 1, type 2, or type 3 code book, $n_{HARQ-ACK}$($i$) may be the total bit number of the HP HARQ-ACK and the LP HARQ-ACK determined in a specified manner; in a case that the HP HARQ-ACK of the UE is not configured with any one of *pdsch-HARQ ACK Codebook, pdsch-HARQ-A CK-Codebook-r 16, pdsch-HARQ-ACK-OneShotFeedback,* and Triggering HARQ-ACKretx, if the HP HARQ-ACK is multiplexed on the PUCCH,

$n^{HP}_{HARQ-ACK}(i) = 1$ , otherwise, $n^{HP}_{HARQ-ACK}(i) = 0$ ; in a case that the LP HARQ-ACK is not configured with any one of *pdsch-HARQ-ACK-Codebook, pdsch-HARQ-ACK-Codebook-r16, pdsch-*

*HARQ-ACK-OneShotFeedback,* and Triggering HARQ-ACKretx, if the LP HARQ-ACK is multiplexed on the PUCCH, $n_{HARQ-ACK}^{LP}(i) = 1$, otherwise, $n_{HARQ-ACK}^{LP}(i) = 0$;

$O_{SR}(i)$ represents a total bit number of the HP SR and LP SR carried on the PUCCH;

$O_{CSI}(i)$ represents a total bit number of the HP CSI and LP CSI carried on the PUCCH; and

$N_{RE}(i)$ represents a total number of REs occupied by the HP UCI and the LP UCI.

(2) If the total bit number of the HP UCL and LP UCI carried on the PUCCH is greater than 11, $\Delta_{TF,b,f,c}(i) = 10log_{10}(2^{K2 \cdot BPRE(i)} - 1)$, where

$K_2 = 2.4$; and

$BPRE(i) = (O_{ACK}(i) + O_{SR}(i) + O_{CSI}(i) + O_{CRC}(i)/N_{RE}(i)$, where $O_{ACK}(i)$ represents a total number of the HP HARQ-ACK and the LP HARQ-ACK, and for a type 1, type 2, or type 3 code book, in a case that the HP HARQ-ACK of the UE is not configured with any one of *pdsch-HARQ-ACK-Codebook, pdsch-HARQ-ACK-Codebook-r16, pdsch-HARQ-ACK-OneShotFeedback,* and Triggering HARQ-ACKretx, if the HP HARQ-ACK is multiplexed on the PUCCH, $O_{ACK}^{HP}(i) = 1$, otherwise, $O_{ACK}^{HP}(i) = 0$; in a case that the LP HARQ-ACK is not configured with any one of *pdsch-HARQ-ACK-Codebook, pdsch-HARQ-ACK-Codebook-r 16, pdsch-HARQ-ACK-OneShotFeedback,* and Triggering HARQ-ACKretx, if the LP HARQ-ACK is multiplexed on the PUCCH, $O_{ACK}^{LP}(i) = 1$, otherwise, $O_{ACK}^{LP}(i) = 0$; $O_{SR}(i)$ represents a total bit number of the HP SR and the LP SR; $O_{CSI}(i)$ represents a total bit number of the HP CSI and the LP CSI; and $N_{RE}(i)$ represents a total number of REs occupied by the HP UCI and the LP UCI, and $N_{RE}(i) = M_{RB,b,f,c}^{PUCCH}(i) \cdot N_{SC,ctrl}^{RB}(i) \cdot N_{symb-UCI,b,f,c}^{PUCCH}(i)$, where $M_{RB,b,f,c}^{PUCCH}(i)$ represents a PUCCH transmission bandwidth, $N_{SC,ctrl}^{RB}(i)$ represents the number of sub-carriers other than sub-carriers occupied by a demodulation reference signal (Demodulation Reference Signal, DMRS) in each RB, and $N_{symb-UCI,b,f,c}^{PUCCH}(i)$ represents the number of symbols other than symbols used by the DMRS.

Manner 4:

(1) If the HP UCI and LP UCI carried on the PUCCH satisfies: $\alpha \cdot n_{UCI}^{HP} + \beta \cdot n_{UCI}^{LP} \leq$ 11bits, $\Delta_{TF,b,f,c}(i) = 10log_{10}(K_1 \cdot (n_{HARQ-ACK}(i) + O_{SR}(i) + O_{CSI}(i))/N_{RE}(i))$, where

$K_1 = 6$;

$n_{HARQ-ACK}(i)$ represents a bit number of weighted (or effective) HARQ-ACK, and $n_{HARQ-ACK}(i) = \alpha_{HP} \cdot n_{HARQ-ACK}^{HP} + \alpha_{LP} \cdot n_{HARQ-ACK}^{LP}$; for a type 1, type 2, or type 3 codebook, $n_{HARQ-ACK}^{HP}$ and $n_{HARQ-ACK}^{LP}$ are respectively the bit numbers of the HP HARQ-ACK and LP HARQ-ACK determined in a specified manner; in a case that the HP HARQ-ACK of the UE is not configured with any one of *pdsch-HARQACKCodebook, pdsch-HARQACKCodebook-r16, pdsch-HARQ-ACK-OneShotFeedback,* and Triggering HARQ-ACKretx, if the HP HARQ-ACK is multiplexed on the PUCCH, $n_{HARQ-ACK}^{HP} = 1$, otherwise, $n_{HARQ-ACK}^{HP} = 0$; in a case that the LP HARQ-ACK is not configured with any one of *pdsch-HARQ-ACK-Codebook, pdsch-HARQ-ACK-Codebook-r 16, pdsch-HARQ-ACK-OneShotFeedback,* and Triggering HARQ-ACKretx, if the LP HARQ-ACK is multiplexed on the PUCCH, $n_{HARQ-ACK}^{LP} = 1$, otherwise, $n_{HARQ-ACK}^{LP} = 0$;

$O_{SR}(i)$ represents a bit number of a weighted (or effective) SR, and $O_{SR}(i) = \beta_{HP} \cdot O_{SR}^{HP}(i) + \beta_{LP} \cdot O_{SR}^{LP}(i)$, where $O_{SR}^{HP}(i)$ and $O_{SR}^{LP}(i)$ respectively represent the bit numbers of the HP SR and the LP SR;

$O_{CSI}(i)$ represents a bit number of weighted (or effective) CSI, and $O_{SR}(i) = \gamma_{HP} \cdot O_{CSI}^{HP}(i) + \gamma_{LP} \cdot O_{CSI}^{LP}(i)$, where $O_{CSI}^{HP}(i)$ and $O_{CSI}^{LP}(i)$ respectively represent the bit numbers of the HP CSI and the LP CSI, and if there is no HP CSI, $O_{SR}^{HP}(i) = 0$; and

$N_{RE}(i)$ represents the number of weighted (or effective) REs occupied by the UCI; and $N_{RE}(i) = \delta_{HP} \cdot N_{RE}^{HP}(i) + \delta_{LP} \cdot N_{RE}^{LP}(i)$, where $N_{RE}^{HP}(i)$ and $N_{RE}^{LP}(i)$ respectively represent the numbers of REs occupied by the HP UCI and the LP UCI.

(2) If the HP UCI and the LP UCI satisfy the following formula: $\alpha \cdot n_{UCI}^{HP} + \beta \cdot n_{UCI}^{LP} > 11$ bits, $\Delta_{TF,b,f,c}(i)$ = 10$log_{10}(2^{K2 \cdot BPRE(i)} - 1)$, where

$K_2 = 2.4$;
BPRE$(i)$ = $(O_{ACK}(i) + O_{SR}(i) + O_{CSI}(i) + O_{CRC}(i))/NRE(i)$, where
$O_{ACK}(i)$ represents a bit number of weighted (or effective) HARQ-ACK, and for a type 1, type 2, or type 3 code book, $O_{ACK}^{HP}(i)$ and $O_{ACK}^{LP}(i)$ may be the bit numbers of the HP HARQ-ACK and the LP HARQ-ACK determined in a specified manner; in a case that the HP HARQ-ACK of the UE is not configured with any one of *pdsch-HARQ-ACK-Codebook, pdsch-HARQ-ACK-Codebook-r16, pdsch-HARQ-ACK-One-ShotFeedback,* and Triggering HARQ-ACKretx, if the HP HARQ-ACK is multiplexed on the PUCCH, $O_{ACK}^{HP}(i) = 1$, otherwise, $O_{ACK}^{HP}(i) = 0$; if the LP HARQ-ACK is not configured with any one of *pdsch-HARQ ACK Codebook, pdsch-HARQ-A CK-Codebook-r 16, pdsch-HARQ-ACK-OneShotFeedback,* and Triggering HARQ-ACKretx and the LP HARQ-ACK is multiplexed on the PUCCH, $O_{ACK}^{LP}(i) = 1$, otherwise, $O_{ACK}^{LP}(i) = 0$; and

$O_{SR}(i)$ represents a bit number of a weighted (or effective) SR, and $O_{SR}(i) = \beta_{HP} \cdot O_{SR}^{HP}(i) + \beta_{LP} \cdot O_{SR}^{LP}(i)$, where $O_{SR}^{HP}(i)$ and $O_{SR}^{LP}(i)$ respectively represent the bit numbers of the HP SR and the LP SR; $O_{CSI}(i)$ represents a bit number of weighted (or effective) CSI, for example, $O_{CSI}(i) = \gamma_{HP} \cdot O_{CSI}^{HP}(i) + \gamma_{LP} \cdot O_{CSI}^{LP}(i)$, where $O_{CSI}^{HP}(i)$ and $O_{CSI}^{LP}(i)$ respectively represent the bit numbers of the HP CSI and the LP CSI, and if there is no HP CSI, $O_{CSI}^{HP}(i) = 0$; $N_{RE}(i)$ represents the number of weighted (or effective) REs occupied by the UCI; and $N_{RE}(i) = \delta_{HP} \cdot N_{RE}^{HP}(i) + \delta_{LP} \cdot N_{RE}^{LP}(i)$, where $N_{RE}^{HP}(i)$ and $N_{RE}^{LP}(i)$ respectively represent the numbers of REs occupied by the HP UCI and the LP UCI.

It should be noted that the foregoing $\alpha$, $\beta$, $\alpha_{HP}$, $\alpha_{LP}$, $\beta_{HP}$, $\beta_{LP}$, $\gamma_{HP}$, $\gamma_{LP}$, $\delta_{HP}$, and $\delta_{LP}$ are values from 0 to 1 (including 0 and 1) and may be prescribed by a protocol, configured by a higher layer parameter, indicated by the DCI, or determined based on a pre-definition rule, for example, determined based on code rates of the HP UCI and the LP UCI. Optionally, $\alpha_{HP} = \beta_{HP} = \gamma_{HP} = \delta_{HP}$, $\alpha_{LP} = \beta_{LP} = \gamma_{LP} = \delta_{LP}$, $\alpha = 1$, and $\beta = R_{LP-UCI}/R_{HP-UCI}$

, where $R_{LP\text{-}UCI}$ and $R_{HP\text{-}UCI}$ respectively represent the corresponding code rates of the LP UCI and the HP UCI.

In the technical solution provided in this embodiment of this application, when the LP UCI and the HP UCI are multiplexed on one PUCCH, the power for the PUCCH transmission is determined based on the bit number of the LP UCI and/or the HP UCI, improving the effectiveness of the communication system.

It should be noted that the method for controlling a power for a PUCCH transmission provided in this embodiment of this application may be performed by an apparatus for controlling a power for a PUCCH transmission or a control module for performing the method for controlling a power for a PUCCH transmission in the apparatus for controlling a power for a PUCCH transmission. In this embodiment of this application, a method for controlling a power for a PUCCH transmission being performed by an apparatus for controlling a power for a PUCCH transmission is used as an example for describing the apparatus for controlling a power for a PUCCH transmission provided in the embodiments of this application.

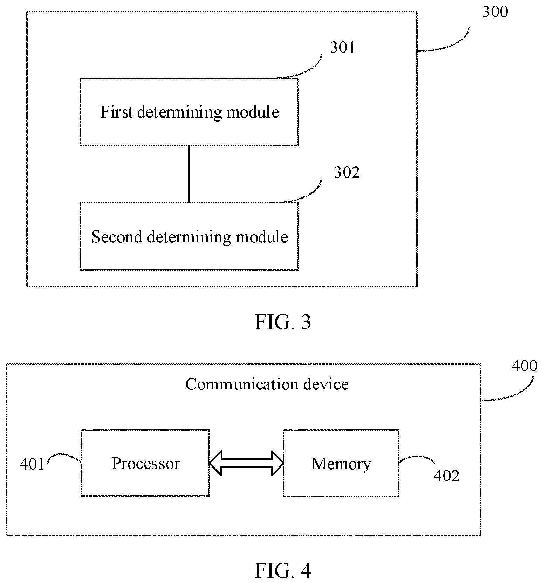

FIG. 3 is a schematic structural diagram of an apparatus for controlling a power for a PUCCH transmission according to an embodiment of this application. As shown in FIG. 3, the apparatus 300 mainly included a first determining module 301 and a second determining module 302.

In this embodiment of this application, the first determining module 301 is configured to determine first UCI and second UCI multiplexed on one PUCCH for transmission, where a priority of the first UCI is a first priority, a priority of the second UCI is a second priority, and the first priority is higher than the second priority; and the second determining module 302 is configured to determine a power for the PUCCH transmission based on a first bit number, where the first bit number is determined based on a bit number of the first UCI and/or a bit number of the second UCI.

In a possible implementation, the determining, by the second determining module 302, a power for the PUCCH transmission based on a first bit number includes:

> determining a PUCCH transmission power adjustment factor for the PUCCH based on the first bit number; and
> determining the power for the PUCCH transmission based on the PUCCH transmission power adjustment factor.

In a possible implementation, a format of the PUCCH includes one of the following: PUCCH format 2, PUCCH format 3, and PUCCH format 4.

In a possible implementation, the determining, by the second determining module 302, a PUCCH transmission power adjustment factor based on the first bit number includes:

> in a case that the first bit number is less than or equal to a threshold, determining, by the terminal, the PUCCH transmission power adjustment factor $\Delta_{TF,b,f,c}(i)$ in the following manner:

$$\Delta_{TF,b,f,c}(i) = 10log_{10}\left(K_1 \cdot \left(n_{HARQ-ACK}(i) + O_{SR}(i) + O_{CSI}(i)\right)/N_{RE}(i)\right),$$

> where

> $K_1$ is a first predetermined value;
> $n_{HARQ\text{-}ACK}(i)$ is a second bit number, where the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;
> $O_{SR}(i)$ is a third bit number, where the third bit number is determined based on a bit number of a first scheduling request SR of the first priority transmitted over the PUCCH and/or a bit number of a second SR of the second priority transmitted over the PUCCH;
> $O_{CSI}(i)$ is a fourth bit number, where the fourth bit number is determined based on a bit number of first channel state information CSI of the first priority transmitted over the PUCCH and/or a bit number of second CSI of the second priority transmitted over the PUCCH; and
> $N_{RE}(i)$ is the number of first REs, where the number of first REs is determined based on the number of resource elements REs occupied by the first UCI and/or the number of resource elements REs occupied by the second UCI.

In a possible implementation, the second bit number $n_{HARQ\text{-}ACK}(i)$ is determined in the following manner:

$$\alpha_1 \cdot n_{HARQ-ACK}^{HP} + \beta_1 \cdot n_{HARQ-ACK}^{LP}$$, where $n_{HARQ-ACK}^{HP}$ is the bit number of the first HARQ-ACK,

$n_{HARQ-ACK}^{LP}$ is the bit number of the second HARQ-ACK, $0 \leq \alpha_1 \leq 1$, and $0 \leq \beta_1 \leq 1$.

In a possible implementation, the bit number $n_{HARQ-ACK}^{HP}$ of the first HARQ-ACK is determined in the following manner:

in a case that no HARQ-ACK codebook is configured for the HARQ-ACK of the first priority and the first HARQ-ACK is transmitted over the PUCCH, $n_{HARQ-ACK}^{HP}=1$;

in a case that no first HARQ-ACK is transmitted over the PUCCH, $n_{HARQ-ACK}^{HP}=0$; and

in a case that a HARQ-ACK codebook is configured for the HARQ-ACK of the first priority and the first HARQ-ACK is transmitted over the PUCCH, $n_{HARQ-ACK}^{HP}$ is the bit number of the first HARQ-ACK determined in a predetermined manner.

In a possible implementation, the bit number $n_{HARQ-ACK}^{LP}$ of the second HARQ-ACK is determined in the following manner:

in a case that no HARQ-ACK codebook is configured for the HARQ-ACK of the second priority and the second HARQ-ACK is transmitted over the PUCCH, $n_{HARQ-ACK}^{LP}=1$;

in a case that no second HARQ-ACK is transmitted over the PUCCH, $n_{HARQ-ACK}^{LP}=0$; and

in a case that a HARQ-ACK codebook is configured for the HARQ-ACK of the second priority and the second HARQ-ACK is transmitted over the PUCCH, $n_{HARQ-ACK}^{LP}$ is the bit number of the second HARQ-ACK determined in a predetermined manner.

In a possible implementation, the determining, by the second determining module 302, a PUCCH transmission power adjustment factor for the PUCCH based on the first bit number includes:

in a case that the first bit number is greater than a threshold, determining the PUCCH transmission power adjustment factor $\Delta_{TF,b,f,c}(i)$ in the following manner:

$$\Delta_{TF,b,f,c}(i) = 10 log_{10}\big(2^{K_2 \cdot BPRE(i)} - 1\big),$$

where

$K_2$ is a second predetermined value; and

BPRE($i$) = ($O_{ACK}(i)$ + $O_{SR}(i)$ + $O_{CSI}(i)$ + $O_{CRC}(i)$)/$N_{RE}(i)$; where $O_{ACK}(i)$ is a second bit number, and the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH; $O_{SR}(i)$ is a third bit number, where the third bit number is determined based on a bit number of a first scheduling request SR of the first priority transmitted over the PUCCH and/or a bit number of a second SR of the second priority transmitted over the PUCCH; $O_{CSI}(i)$ is a fourth bit number, where the fourth bit number is determined based on a bit number of first channel state information CSI of the first priority transmitted over the PUCCH and/or a bit number of second CSI of the second priority transmitted over the PUCCH; $O_{CRC}(i)$ is a fifth bit number, where the fifth bit number is determined based on a bit number of first cyclic redundancy check CRC of the first priority transmitted over the PUCCH and/or a bit number of second CRC of the second priority transmitted over the PUCCH; and $N_{RE}(i)$ is the number of first REs, where the number of first REs is determined based on the number of REs occupied by the first UCI and/or the number of REs occupied by the second UCI.

In a possible implementation, the fifth bit number $O_{CRC}(i)$ is: $\alpha_2 \cdot n_{CRC}^{HP} + \beta_2 \cdot n_{CRC}^{LP}$, where $n_{CRC}^{HP}$ is the bit number of the first CRC, $n_{CRC}^{LP}$ is the bit number of the second CRC, $0 \leq \alpha_2 \leq 1$, and $0 \leq \beta_2 \leq 1$.

In a possible implementation, the third bit number $O_{SR}(i)$ is: $\alpha_3 \cdot n_{SR}^{HP} + \beta_3 \cdot n_{SR}^{LP}$, where $n_{SR}^{HP}$ is the bit number of the first SR of the first priority, $n_{SR}^{LP}$ is the bit number of the second SR of the second priority, $0 \leq \alpha_3 \leq 1$, and $0 \leq \beta_3 \leq 1$.

In a possible implementation, the fourth bit number $O_{CSI}(i)$ is: $\alpha_4 \cdot n_{CSI}^{HP} + \beta_4 \cdot n_{CSI}^{LP}$, where $n_{CSI}^{HP}$ is the bit number of the first CSI of the first priority, $n_{CSI}^{LP}$ is the bit number of the second CSI of the second priority, $0 \leq \alpha_4 \leq 1$, and $0 \leq \beta_4 \leq 1$.

In a possible implementation, where the number of first REs $N_{RE}(i)$ is: $\alpha_5 \cdot N_{RE}^{HP}(i) + \beta_5 \cdot N_{RE}^{LP}(i)$, where $N_{RE}^{HP}(i)$ is the number of REs occupied by the first UCI, $N_{RE}^{HP}(i)$ is the number of REs occupied by the second UCI, $0 \leq \alpha_5 \leq 1$, and $0 \leq \beta_5 \leq 1$.

In a possible implementation, the format of the PUCCH includes one of the following: PUCCH format 0 and PUCCH format 1.

In a possible implementation, the second determining module 302 determines the PUCCH transmission power adjustment factor $\Delta_{TF,b,f,c}(i)$ in the following manner:

$$\Delta_{TF,b,f,c}(i) = 10 log_{10}\left(\frac{N_{ref}^{PUCCH}}{N_{symb}^{PUCCH}(i)}\right) + \Delta_{UCI}(i), \text{\textquotesingle}$$

where $N_{symb}^{PUCCH}(i)$ is the number of symbols for transmission of the PUCCH;

in a case that the format of the PUCCH is PUCCH format 0, $N_{ref}^{PUCCH} =$ Third predetermined value, and in a case that the format of the PUCCH is PUCCH format 1, $N_{ref}^{PUCCH} = N_{symb}^{slot}$, and $N_{symb}^{slot}$ is the number of symbols in one slot; and

in a case that the format of the PUCCH is PUCCH format 0, $\Delta_{UCI}(i) = 0$, and in a case that the format of the PUCCH is PUCCH format 1, $\Delta_{UCI}(i) = 10 log_{10}(O_{UCI}(i))$, where $O_{UCI}(i)$ is the first bit number.

In a possible implementation, the first bit number is: $\alpha_6 \cdot n_{UCI}^{HP} + \beta_6 \cdot n_{UCI}^{LP}$, where $n_{UCI}^{HP}$ is the bit number of the first UCI, $n_{UCI}^{LP}$ is the bit number of the second UCI, $0 \leq \alpha_6 \leq 1$, and $0 \leq \beta_6 \leq 1$.

In the technical solution provided in this embodiment of this application, when the first determining module determines to multiplex the LP UCI and the HP UCI on one PUCCH, the second determining module determines the power for the PUCCH transmission based on the bit number of the LP UCI and/or the HP UCI, improving the effectiveness of the communication system.

The apparatus for controlling a power for a PUCCH transmission in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (Television, TV), a teller machine, a self-service machine, and the like, which are not specifically limited in this embodiment of this application.

The apparatus for controlling a power for a PUCCH transmission in this embodiment of this application may be an apparatus with an operating system. The operating system may be an android (Android) operating system, may be an iOS operating system, or may be another possible operating system. This is not specifically limited in this embodiment of this application.

The apparatus for controlling a power for a PUCCH transmission provided in this embodiment of this application can implement the processes implemented in the method embodiment in FIG. 2, with the same technical effects achieved. To avoid repetition, details are not described herein again.

Optionally, as shown in FIG. 4, an embodiment of this application further provides a communication device 400 including a processor 401, a memory 402, and a program or instructions stored in the memory 402 and capable of running on the processor 401. For example, when the communication device 400 is a terminal and when the program or instructions are executed by the processor 401, the processes of the foregoing embodiments of the method for controlling a power for a PUCCH transmission are implemented, with the same technical effects achieved. When the communication device 400 is a network-side device and when the program or instructions are executed by the processor 401, the processes of the foregoing embodiments of the method for controlling a power for a PUCCH transmission are implemented, with the same technical effects achieved. To avoid repetition, details are not described herein again.

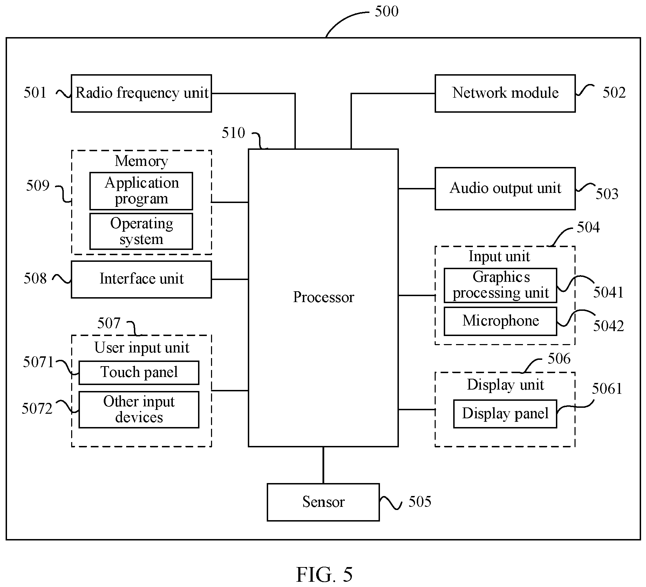

An embodiment of this application further provides a terminal including a processor and a communication interface, where the processor is applied to the processes of the foregoing embodiments of the method for controlling a power for a PUCCH transmission, and the communication interface is configured to communicate with other communication devices, for example, to communicate with other terminals or network-side devices. This terminal embodiment corresponds to the foregoing method embodiments on the terminal side. All implementation processes and implementation manners in the foregoing method embodiments may be applicable to this terminal embodiment, with the same technical effects achieved. Specifically, FIG. 5 is a schematic diagram of a hardware structure of a terminal for implementing the embodiments of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

It can be understood by those skilled in the art that the terminal 500 may further include a power supply (for example, a battery) supplying power to the components. The power supply may be logically connected to the processor 510 via a power management system, so that functions such as charge management, discharge management, and power consumption management are implemented by using the power management system. The structure of the terminal shown in FIG. 5 does not constitute any limitation on the terminal, and the terminal may include more or fewer components than shown in the figure, or combine some of the components, or have different arrangements of the components. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061. The display panel 5061 may be configured in a form of a liquid crystal display, an organic light-emitting diode display, or the like. The user input unit 507 includes a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function button (for example, a volume control button or a power on/off button), a trackball, a mouse, and a joystick. Details are not described herein again.

In the embodiments of this application, the radio frequency unit 501 sends downlink data received from a network-side device to the processor 510 for processing, and in addition, sends uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may include a program or instruction storage area and a data storage area. The program or instruction storage area may store an operating system, an application program or instruction required by at least one function (for example, a sound playback function or an image playback function), and the like. In addition, the memory 509 may include a high-speed random access memory, and may further include a non-volatile memory, where the non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one disk storage device, flash memory device, or another non-transitory solid-state storage device.

The processor 510 may include one or more processing units. Optionally, the processor 510 may integrate an application processor and a modem processor. The application processor mainly processes an operating system, a user interface, an application program, instructions, or the like. The modem processor mainly processes wireless communication, for example, being a baseband processor. It can be understood that the modem processor may alternatively be not integrated in the processor 510.

The processor 510 is configured to determine first UCI and second UCI multiplexed on one PUCCH for transmission, where a priority of the first UCI is a first priority, a priority of the second UCI is a second priority, and the first priority is higher than the second priority; and determine a power for a PUCCH transmission based on a first bit number, where the first bit number is determined based on a bit number of the first UCI and/or a bit number of the second UCI.

Optionally, the determining a power for a PUCCH transmission based on a first bit number includes:

determining a PUCCH transmission power adjustment factor for the PUCCH based on the first bit number; and determining the power for the PUCCH transmission based on the PUCCH transmission power adjustment factor.

Optionally, a format of the PUCCH includes one of the following: PUCCH format 2, PUCCH format 3, and PUCCH format 4.

Optionally, the determining a PUCCH transmission power adjustment factor based on the first bit number includes:

in a case that the first bit number is less than or equal to a threshold, the terminal determines the PUCCH transmission power adjustment factor $\Delta_{TF,b,f,c}(i)$ in the following manner:

$$\Delta_{TF,b,f,c}(i) = 10log_{10}\left(K_1 \cdot \left(n_{HARQ-ACK}(i) + O_{SR}(i) + O_{CSI}(i)\right)/N_{RE}(i)\right),$$

where

$K_1$ is a first predetermined value;

$n_{HARQ-ACK}(i)$ is a second bit number, where the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;

$O_{SR}(i)$ is a third bit number, where the third bit number is determined based on a bit number of a first scheduling request SR of the first priority transmitted over the PUCCH and/or a bit number of a second SR of the second priority transmitted over the PUCCH;

$O_{CSI}(i)$ is a fourth bit number, where the fourth bit number is determined based on a bit number of first channel state information CSI of the first priority transmitted over the PUCCH and/or a bit number of second CSI of the second priority transmitted over the PUCCH; and

$N_{RE}(i)$ is the number of first REs, where the number of first REs is determined based on the number of resource elements REs occupied by the first UCI and/or the number of resource elements REs occupied by the second UCI.

Optionally, the second bit number $n_{HARQ-ACK}(i)$ is determined in the following manner:

$\alpha_1 \cdot n_{HARQ-ACK}^{HP} + \beta_1 \cdot n_{HARQ-ACK}^{LP}$ , where $n_{HARQ-ACK}^{HP}$ is the bit number of the first HARQ-ACK,

$n_{HARQ-ACK}^{LP}$ is the bit number of the second HARQ-ACK, $0 \leq \alpha_1 \leq 1$, and $0 \leq \beta_1 \leq 1$.

Optionally, the determining a PUCCH transmission power adjustment factor based on the first bit number includes:

in a case that the first bit number is greater than a threshold, determining the PUCCH transmission power adjustment factor $\Delta_{TF,b,f,c}(i)$ in the following manner:

$$\Delta_{TF,b,f,c}(i) = 10log_{10}\left(2^{K_2 \cdot BPRE(i)} - 1\right),$$

where

$K_2$ is a second predetermined value; and

$BPRE(i) = (O_{ACK}(i) + O_{SR}(i) + O_{CSI}(i) + O_{CRC}(i))/N_{RE}(i)$, where $O_{ACK}(i)$ is a second bit number, and the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH; $O_{SR}(i)$ is a third bit number, where the third bit number is determined based on a bit number of a first scheduling request SR of the first priority transmitted over the PUCCH and/or a bit number of a second SR of the second priority transmitted over the PUCCH; $O_{CSI}(i)$ is a fourth bit number, where the fourth bit number is determined based on a bit number of first channel state information CSI of the first priority transmitted over the PUCCH and/or a bit number of second CSI of the second priority transmitted over the PUCCH; $O_{CRC}(i)$ is a fifth bit number, where the fifth bit number is determined based on a bit number of first cyclic redundancy check CRC of the first priority transmitted over the PUCCH and/or a bit number of second CRC of the second priority transmitted over the PUCCH; and $N_{RE}(i)$ is the number of first REs, where the number of first REs is determined based on the number of REs occupied by the first UCI and/or the number of REs occupied by the second UCI.

An embodiment of this application further provides a readable storage medium, where a program or instructions are stored in the readable storage medium. When the program or instructions are executed by a processor, the processes of the foregoing embodiments of the method for controlling a power for a PUCCH transmission can be implemented, with the same technical effects achieved. To avoid repetition, details are not described herein again.

The processor is a processor in the terminal described in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, where the communication interface is coupled to the processor, and the processor is configured to run a program or instructions to implement the processes of the foregoing embodiments of the method for controlling a power for a PUCCH transmission, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a non-transitory storage medium. When the program/program product is executed by at least one processor, the processes of the foregoing embodiments of the method for controlling a power for a PUCCH transmission are implemented, with the same technical effects achieved. To avoid repetition, details are not described herein again.

It should be noted that in this specification, the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from the principle of this application and the protection scope of the claims, and all such manners fall within the protection scope of this application.

**Claims**

1. A method for controlling a power for a physical uplink control channel PUCCH transmission, comprising:

   determining, by a terminal, first uplink control information UCI and second UCI multiplexed on one PUCCH for transmission, wherein a priority of the first UCI is a first priority, a priority of the second UCI is a second priority, and the first priority is higher than the second priority; and
   determining, by the terminal, a power for the PUCCH transmission based on a first bit number, wherein the first bit number is determined based on a bit number of the first UCI and/or a bit number of the second UCI.

2. The method according to claim 1, wherein the determining, by the terminal, a power for the PUCCH transmission based on a first bit number comprises:

   determining, by the terminal, a PUCCH transmission power adjustment factor for the PUCCH based on the first bit number; and
   determining the power for the PUCCH transmission based on the PUCCH transmission power adjustment factor.

3. The method according to claim 2, wherein the determining, by the terminal, a PUCCH transmission power adjustment factor based on the first bit number comprises:

   in a case that the first bit number is less than or equal to a threshold, determining, by the terminal, the PUCCH transmission power adjustment factor $\Delta_{TF,b,f,c}(i)$ in the following manner:

   $$\Delta_{TF,b,f,c}(i) = 10log_{10}\left(K_1 \cdot \left(n_{HARQ-ACK}(i) + O_{SR}(i) + O_{CSI}(i)\right)/N_{\text{RE}}(i)\right);$$

   wherein $K_1$ is a first predetermined value;
   $n_{HARQ-ACK}(i)$ is a second bit number, wherein the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;
   $O_{SR}(i)$ is a third bit number, wherein the third bit number is determined based on a bit number of a first scheduling request SR of the first priority transmitted over the PUCCH and/or a bit number of a second SR of the second priority transmitted over the PUCCH;
   $O_{CSI}(i)$ is a fourth bit number, wherein the fourth bit number is determined based on a bit number of first channel state information CSI of the first priority transmitted over the PUCCH and/or a bit number of second CSI of the second priority transmitted over the PUCCH; and
   $N_{RE}(i)$ is a number of first resource elements REs, wherein the number of the first REs is determined based on a number of REs occupied by the first UCI and/or a number of REs occupied by the second UCI.

4. The method according to claim 3, wherein the second bit number $n_{HARQ-ACK}(i)$ is determined in the following manner:

   $$\alpha_1 \cdot n_{HARQ-ACK}^{HP} + \beta_1 \cdot n_{HARQ-ACK}^{LP},$$

   wherein

   $n_{HARQ-ACK}^{HP}$ is the bit number of the first HARQ-ACK, $n_{HARQ-ACK}^{LP}$ is the bit number of the second HARQ-ACK, $0 \leq \alpha_1 \leq 1$, and $0 \leq \beta_1 \leq 1$.

5. The method according to claim 4, wherein the bit number $n_{HARQ-ACK}^{HP}$ of the first HARQ-ACK is determined in the following manner:

   in a case that no HARQ-ACK codebook is configured for HARQ-ACK of the first priority of the terminal and the first HARQ-ACK is transmitted over the PUCCH, $n_{HARQ-ACK}^{HP}=1$;

   in a case that no first HARQ-ACK is transmitted over the PUCCH, $n_{HARQ-ACK}^{HP}=0$; and

   in a case that the first HARQ-ACK is transmitted over the PUCCH, $n_{HARQ-ACK}^{HP}$ is the bit number of the first HARQ-ACK determined in a predetermined manner.

6. The method according to claim 4 or 5, wherein the bit number $n_{HARQ-ACK}^{LP}$ of the second HARQ-ACK is determined in the following manner:

in a case that no HARQ-ACK codebook is configured for HARQ-ACK of the second priority of the terminal and that the second HARQ-ACK is transmitted over the PUCCH, $n_{HARQ-ACK}^{LP}=1$;

in a case that no second HARQ-ACK is transmitted over the PUCCH, $n_{HARQ-ACK}^{LP}=0$; and

in a case that a HARQ-ACK codebook is configured for the HARQ-ACK of the second priority of the terminal and the second HARQ-ACK is transmitted over the PUCCH, $n_{HARQ-ACK}^{LP}$ is the bit number of the second HARQ-ACK determined in a predetermined manner.

7. The method according to claim 2, wherein the determining, by the terminal, a PUCCH transmission power adjustment factor based on the first bit number comprises:

in a case that the first bit number is greater than a threshold, determining, by the terminal, the PUCCH transmission power adjustment factor $\Delta_{TF,b,f,c}(i)$ in the following manner:

$$\Delta_{TF,b,f,c}(i) = 10log_{10}\big(2^{K_2 \cdot BPRE(i)} - 1\big),$$

wherein $K_2$ is a second predetermined value;

$$\text{BPRE}(i) = \big(O_{ACK}(i) + O_{SR}(i) + O_{CSI}(i) + O_{CRC}(i)\big)/N_{RE}(i),$$

wherein

$O_{ACK}(i)$ is a second bit number, wherein the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;

$O_{SR}(i)$ is a third bit number, wherein the third bit number is determined based on a bit number of a first SR of the first priority transmitted over the PUCCH and/or a bit number of a second SR of the second priority transmitted over the PUCCH;

$O_{CSI}(i)$ is a fourth bit number, wherein the fourth bit number is determined based on a bit number of first channel state information CSI of the first priority transmitted over the PUCCH and/or a bit number of second CSI of the second priority transmitted over the PUCCH;

$O_{CRC}(i)$ is a fifth bit number, wherein the fifth bit number is determined based on a bit number of first cyclic redundancy check CRC of the first priority transmitted over the PUCCH and/or a bit number of second CRC of the second priority transmitted over the PUCCH; and

$N_{RE}(i)$ is a number of first REs, wherein the number of the first REs is determined based on a number of REs occupied by the first UCI and/or a number of REs occupied by the second UCI.

8. The method according to claim 7, wherein the fifth bit number $O_{CRC}(i)$ is:

$$\alpha_2 \cdot n_{CRC}^{HP} + \beta_2 \cdot n_{CRC}^{LP},$$

wherein $n_{CRC}^{HP}$ is the bit number of the first CRC, $n_{CRC}^{LP}$ is the bit number of the second CRC, $0 \leq \alpha_2 \leq 1$, and $0 \leq \beta_2 \leq 1$.

9. The method according to any one of claims 3 to 8, wherein the threshold is 11.

10. The method according to any one of claims 3 to 9, wherein the third bit number $O_{SR}(i)$ is:

$$\alpha_3 \cdot n_{SR}^{HP} + \beta_3 \cdot n_{SR}^{LP},$$

wherein

$n_{SR}^{HP}$ is the bit number of the first SR of the first priority, $n_{SR}^{LP}$ is the bit number of the second SR of the second priority, $0 \leq \alpha_3 \leq 1$, and $0 \leq \beta_3 \leq 1$.

11. The method according to any one of claims 3 to 10, wherein the fourth bit number $O_{CSI}(i)$ is:

$\alpha_4 \cdot n_{CSI}^{HP} + \beta_4 \cdot n_{CSI}^{LP}$, wherein $n_{CSI}^{HP}$ is the bit number of the first CSI of the first priority, $n_{CSI}^{LP}$ is the bit number of the second CSI of the second priority, $0 \leq \alpha_4 \leq 1$, and $0 \leq \beta_4 \leq 1$.

12. The method according to any one of claims 3 to 11, wherein the number of the first REs $N_{RE}(i)$ is:

$$\alpha_5 \cdot N_{RE}^{HP}(i) + \beta_5 \cdot N_{RE}^{LP}(i),$$

wherein $N_{RE}^{HP}(i)$ is the number of the REs occupied by the first UCI, $N_{RE}^{LP}(i)$ is the number of the REs occupied by the second UCI, $0 \leq \alpha_5 \leq 1$, and $0 \leq \beta_5 \leq 1$.

13. The method according to any one of claims 3 to 12, wherein a format of the PUCCH comprises one of the following: PUCCH format 2, PUCCH format 3, and PUCCH format 4.

14. The method according to claim 2, wherein the terminal determines the PUCCH transmission power adjustment factor $\Delta_{TF,b,f,c}(i)$ in the following manner:

$$\Delta_{TF,b,f,c}(i) = 10 log_{10}\left(\frac{N_{ref}^{PUCCH}}{N_{symb}^{PUCCH}(i)}\right) + \Delta_{UCI}(i),$$

wherein

$N_{symb}^{PUCCH}(i)$ is a number of symbols transmitted over the PUCCH;

in a case that a format of the PUCCH is PUCCH format 0, $N_{ref}^{PUCCH} =$ third predetermined value, and alternatively, in a case that the format of the PUCCH is PUCCH format 1, $N_{ref}^{PUCCH} = N_{symb}^{slot}$, wherein $N_{symb}^{slot}$ is a number of symbols in one slot; and

in a case that the format of the PUCCH is the PUCCH format 0, $\Delta_{UCI}(i) = 0$; alternatively, in a case that the format of the PUCCH is the PUCCH format 1, $\Delta_{UCI}(i) = 10 log_{10}(O_{UCI}(i))$, wherein $O_{UCI}(i)$ is the first bit number.

15. The method according to claim 14, wherein the format of the PUCCH comprises one of the following: the PUCCH format 0 and the PUCCH format 1.

16. The method according to any one of claims 1 to 15, wherein the first bit number is:

$$\alpha_6 \cdot n_{UCI}^{HP} + \beta_6 \cdot n_{UCI}^{LP},$$

wherein $n_{UCI}^{HP}$ is the bit number of the first UCI, $n_{UCI}^{LP}$ is the bit number of the second UCI, $0 \leq \alpha_6 \leq 1$, and $0 \leq \beta_6 \leq 1$.

17. An apparatus for controlling a power for a physical uplink control channel PUCCH transmission, comprising:

a first determining module configured to determine first UCI and second UCI multiplexed on one PUCCH for transmission, wherein a priority of the first UCI is a first priority, a priority of the second UCI is a second priority, and the first priority is higher than the second priority; and
a second determining module configured to determine a power for the PUCCH transmission based on a first bit number, wherein the first bit number is determined based on a bit number of the first UCI and/or a bit number of the second UCI.

18. The apparatus according to claim 17, wherein the determining, by the second determining module, a power for the PUCCH transmission based on a first bit number comprises:

determining a PUCCH transmission power adjustment factor for the PUCCH based on the first bit number; and determining the power for the PUCCH transmission based on the PUCCH transmission power adjustment factor.

19. The apparatus according to claim 18, wherein the determining, by the second determining module, a PUCCH transmission power adjustment factor based on the first bit number comprises:

in a case that the first bit number is less than or equal to a threshold, determining, by the terminal, the PUCCH transmission power adjustment factor $\Delta_{TF,b,f,c}(i)$ in the following manner:

$$\Delta_{TF,b,f,c}(i) = 10log_{10}\left(K_1 \cdot \left(n_{HARQ-ACK}(i) + O_{SR}(i) + O_{CSI}(i)\right)/N_{\mathrm{RE}}(i)\right),$$

wherein
$K_1$ is a first predetermined value;
$n_{HARQ-ACK}(i)$ is a second bit number, wherein the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;
$O_{SR}(i)$ is a third bit number, wherein the third bit number is determined based on a bit number of a first scheduling request SR of the first priority transmitted over the PUCCH and/or a bit number of a second SR of the second priority transmitted over the PUCCH;
$O_{CSI}(i)$ is a fourth bit number, wherein the fourth bit number is determined based on a bit number of first channel state information CSI of the first priority transmitted over the PUCCH and/or a bit number of second CSI of the second priority transmitted over the PUCCH; and
$N_{RE}(i)$ is a number of first REs, wherein the number of the first REs is determined based on a number of resource elements REs occupied by the first UCI and/or a number of resource elements REs occupied by the second UCI.

20. The apparatus according to claim 19, wherein the second bit number $n_{HARQ-ACK}(i)$ is determined in the following manner:

$$\alpha_1 \cdot n_{HARQ-ACK}^{HP} + \beta_1 \cdot n_{HARQ-ACK}^{LP},$$

wherein $n_{HARQ-ACK}^{HP}$ is the bit number of the first HARQ-ACK, $n_{HARQ-ACK}^{LP}$ is the bit number of the second HARQ-ACK, $0 \leq \alpha_1 \leq 1$, and $0 \leq \beta_1 \leq 1$.

21. The apparatus according to claim 19, wherein the bit number $n_{HARQ-ACK}^{HP}$ of the first HARQ-ACK is determined in the following manner:

in a case that no HARQ-ACK codebook is configured for HARQ-ACK of the first priority and the first HARQ-ACK is transmitted over the PUCCH, $n_{HARQ-ACK}^{HP}=1$;

in a case that no first HARQ-ACK is transmitted over the PUCCH, $n_{HARQ-ACK}^{HP}=0$; and
in a case that a HARQ-ACK codebook is configured for the HARQ-ACK of the first priority and the first HARQ-ACK is transmitted over the PUCCH, $n_{HARQ-ACK}^{HP}$ is the bit number of the first HARQ-ACK determined in a predetermined manner.

22. The apparatus according to claim 19 or 20, wherein the bit number $n_{HARQ-ACK}^{LP}$ of the second HARQ-ACK is determined in the following manner:

in a case that no HARQ-ACK codebook is configured for HARQ-ACK of the second priority and the second HARQ-ACK is transmitted over the PUCCH, $n_{HARQ-ACK}^{LP}=1$;

in a case that no second HARQ-ACK is transmitted over the PUCCH, $n_{HARQ-ACK}^{LP}=0$; and

in a case that a HARQ-ACK codebook is configured for the HARQ-ACK of the second priority and the second HARQ-ACK is transmitted over the PUCCH, $n_{HARQ-ACK}^{LP}$ is the bit number of the second HARQ-ACK determined in a predetermined manner.

23. The apparatus according to claim 18, wherein the determining, by the second determining module, a PUCCH transmission power adjustment factor based on the first bit number comprises:

in a case that the first bit number is greater than a threshold, determining the PUCCH transmission power adjustment factor $\Delta_{TF,b,f,c}(i)$ in the following manner:

$$\Delta_{TF,b,f,c}(i) = 10log_{10}\left(2^{K_2 \cdot BPRE(i)} - 1\right),$$

wherein $K_2$ is a second predetermined value;
$BPRE(i) = (O_{ACK}(i) + O_{SR}(i) + O_{CSI}(i) + O_{CRC}(i))/N_{RE}(i)$, wherein
$O_{ACK}(i)$ is a second bit number, wherein the second bit number is determined based on a bit number of first hybrid automatic repeat request acknowledgement HARQ-ACK of the first priority transmitted over the PUCCH and/or a bit number of second HARQ-ACK of the second priority transmitted over the PUCCH;
$O_{SR}(i)$ is a third bit number, wherein the third bit number is determined based on a bit number of a first SR of the first priority transmitted over the PUCCH and/or a bit number of a second SR of the second priority transmitted over the PUCCH;
$O_{SR}(i)$ is a fourth bit number, wherein the fourth bit number is determined based on a bit number of first channel state information CSI of the first priority transmitted over the PUCCH and/or a bit number of second CSI of the second priority transmitted over the PUCCH;
$O_{SR}(i)$ is a fifth bit number, wherein the fifth bit number is determined based on a bit number of first cyclic redundancy check CRC of the first priority transmitted over the PUCCH and/or a bit number of second CRC of the second priority transmitted over the PUCCH; and
$N_{RE}(i)$ is a number of first REs, wherein the number of the first REs is determined based on a number of REs occupied by the first UCI and/or a number of REs occupied by the second UCI.

24. The apparatus according to claim 23, wherein the fifth bit number $O_{CRC}(i)$ is:

$$\alpha_2 \cdot n_{CRC}^{HP} + \beta_2 \cdot n_{CRC}^{LP},$$

wherein $n_{CRC}^{HP}$ is the bit number of the first CRC, $n_{CRC}^{LP}$ is the bit number of the second CRC, $0 \leq \alpha_2 \leq 1$, and $0 \leq \beta_2 \leq 1$.

25. The apparatus according to any one of claims 19 to 24, wherein the third bit number $O_{SR}(i)$ is:

$$\alpha_3 \cdot n_{SR}^{HP} + \beta_3 \cdot n_{SR}^{LP},$$

wherein $n_{SR}^{HP}$ is the bit number of the first SR of the first priority, $n_{SR}^{LP}$ is the bit number of the second SR of the second priority, $0 \leq \alpha_3 \leq 1$, and $0 \leq \beta_3 \leq 1$.

26. The apparatus according to any one of claims 19 to 25, wherein the fourth bit number $O_{CSI}(i)$ is:

$$\alpha_4 \cdot n_{CSI}^{HP} + \beta_4 \cdot n_{CSI}^{LP},$$

wherein $n_{CSI}^{HP}$ is the bit number of the first CSI of the first priority, $n_{CSI}^{LP}$ is the bit number of the second CSI of the second priority, $0 \leq \alpha_4 \leq 1$, and $0 \leq \beta_4 \leq 1$.

27. The apparatus according to any one of claims 19 to 26, wherein the number of the first REs $N_{RE}(i)$ is:

$$\alpha_5 \cdot N_{RE}^{HP}(i) + \beta_5 \cdot N_{RE}^{LP}(i),$$

wherein $N_{RE}^{HP}(i)$ is the number of the REs occupied by the first UCI, $N_{RE}^{LP}(i)$ is the number of the REs occupied by the second UCI, $0 \leq \alpha_5 \leq 1$, and $0 \leq \beta_5 \leq 1$.

28. The apparatus according to any one of claims 19 to 27, wherein a format of the PUCCH comprises one of the following: PUCCH format 2, PUCCH format 3, and PUCCH format 4.

29. The apparatus according to claim 18, wherein the second determining module determines the PUCCH transmission power adjustment factor $\Delta_{TF,b,f,c}(i)$ in the following manner:

$$\Delta_{TF,b,f,c}(i) = 10 log_{10} \left( \frac{N_{ref}^{PUCCH}}{N_{symb}^{PUCCH}(i)} \right) + \Delta_{UCI}(i),$$

wherein

$N_{symb}^{PUCCH}(i)$ is a number of symbols transmitted over the PUCCH;

in a case that a format of the PUCCH is PUCCH format 0, $N_{ref}^{PUCCH} =$ Third predetermined value; alternatively, in a case that the format of the PUCCH is PUCCH format 1, $N_{ref}^{PUCCH} = N_{symb}^{slot}$, and $N_{symb}^{slot}$ is a number of symbols in one slot; and in a case that the format of the PUCCH is the PUCCH format 0, $\Delta_{UCI}(i) = 0$; and alternatively, in a case that the format of the PUCCH is the PUCCH format 1, $\Delta_{UCI}(i) = 10 log_{10}(O_{UCI}(i))$, wherein $O_{UCI}(i)$ is the first bit number.

30. The apparatus according to claim 29, wherein the format of the PUCCH comprises one of the following: the PUCCH format 0 and the PUCCH format 1.

31. The apparatus according to any one of claims 17 to 30, wherein the first bit number is:

$$\alpha_6 \cdot n_{UCI}^{HP} + \beta_6 \cdot n_{UCI}^{LP},$$

wherein $n_{UCI}^{HP}$ is the bit number of the first UCI, $n_{UCI}^{LP}$ is the bit number of the second UCI, $0 \leq \alpha_6 \leq 1$, and $0 \leq \beta_6 \leq 1$.

32. A terminal, comprising a processor, a memory, and a program or instructions stored in the memory and capable of running on the processor, wherein when the program or instructions are executed by the processor, steps of the method for controlling the power for the PUCCH transmission according to any one of claims 1 to 16 are implemented.

33. A readable storage medium, wherein a program or instructions are stored in the readable storage medium, and when the program or instructions are executed by a processor, steps of the method for controlling the power for the PUCCH transmission according to any one of claims 1 to 16 are implemented.

12

Network side device

11

11

Terminal

Terminal

FIG. 1

200

S210

A terminal determines first UCI and second UCI multiplexed on one PUCCH for transmission

S212

The terminal determines a power for a PUCCH transmission based on a first bit number

FIG. 2

300

301

First determining module

302

Second determining module

FIG. 3

400

Communication device

401 Processor ⟷ Memory 402

FIG. 4

500

| | | |
|---|---|---|
| 501 | Radio frequency unit | |

510

Memory
Application program
Operating system
509

Network module | 502

Processor

Audio output unit | 503

504
Input unit
Graphics processing unit | 5041
Microphone | 5042

508 | Interface unit

507
User input unit
5071 | Touch panel
5072 | Other input devices

506
Display unit | 5061
Display panel

Sensor | 505

FIG. 5

## INTERNATIONAL SEARCH REPORT

International application No.

**PCT/CN2022/121309**

| A. | CLASSIFICATION OF SUBJECT MATTER |
|---|---|
| | H04W 52/14(2009.01)i |

According to International Patent Classification (IPC) or to both national classification and IPC

| B. | FIELDS SEARCHED |
|---|---|

Minimum documentation searched (classification system followed by classification symbols)

H04W52/-; H04W72/-; H04L5/-

Documentation searched other than minimum documentation to the extent that such documents are included in the fields searched

Electronic data base consulted during the international search (name of data base and, where practicable, search terms used)

CNABS; CNTXT; ENTXTC; CNKI: 第一, 第二, 两个, 多个, UCI, 上行链路控制信息, HARQ-ACK , A/N, CSI, SR, 复用, 同时, 传输, 承载, 发送, PUCCH, 比特数, 功率, 优先级, 权重; VEN; USTXT; WOTXT; EPTXT; 3GPP; IEEE: UE, user equipment, UCI, HARQ-ACK, A/N, CSI, SR, PUCCH, send+, transmit+, receiv+, power, control+, priority, first, second, bit number, multiplex+, weight

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107196747 A (LG ELECTRONICS INC.) 22 September 2017 (2017-09-22) description, paragraphs [0268]-[0289] | 1-2, 16-18, 31-33 |
| X | CN 106257856 A (BEIJING SAMSUNG TELECOM R&D CENTER et al.) 28 December 2016 (2016-12-28) description, paragraphs [0021]-[0059] | 1-2, 16-18, 31-33 |
| A | CN 109600847 A (BEIJING SAMSUNG TELECOM R&D CENTER et al.) 09 April 2019 (2019-04-09) entire document | 1-33 |
| A | WO 2021137564 A1 (SAMSUNG ELECTRONICS CO., LTD.) 08 July 2021 (2021-07-08) entire document | 1-33 |
| A | WO 2021004316 A1 (VIVO COMMUNICATION TECHNOLOGY CO., LTD.) 14 January 2021 (2021-01-14) entire document | 1-33 |
| A | WO 2019172624 A1 (LG ELECTRONICS INC.) 12 September 2019 (2019-09-12) entire document | 1-33 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 December 2022** | **23 December 2022** |

| Name and mailing address of the ISA/CN | Authorized officer |
|---|---|
| China National Intellectual Property Administration (ISA/ CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/121309**

| Patent document cited in search report | | | Publication date (day/month/year) | Patent family member(s) | | | Publication date (day/month/year) |
|---|---|---|---|---|---|---|---|
| CN | 107196747 | A | 22 September 2017 | EP | 3264660 | A1 | 03 January 2018 |
| | | | | EP | 3528414 | A1 | 21 August 2019 |
| | | | | US | 2017006601 | A1 | 05 January 2017 |
| | | | | US | 2021120547 | A1 | 22 April 2021 |
| | | | | WO | 2013112004 | A1 | 01 August 2013 |
| | | | | US | 2017303271 | A1 | 19 October 2017 |
| | | | | HU | E051240 | T2 | 01 March 2021 |
| | | | | KR | 20140119700 | A | 10 October 2014 |
| | | | | US | 2018249460 | A1 | 30 August 2018 |
| | | | | JP | 2016054557 | A | 14 April 2016 |
| | | | | EP | 3104545 | A1 | 14 December 2016 |
| | | | | CN | 104205710 | A | 10 December 2014 |
| | | | | US | 2020092878 | A1 | 19 March 2020 |
| | | | | US | 2014369294 | A1 | 18 December 2014 |
| | | | | EP | 3799343 | A1 | 31 March 2021 |
| | | | | EP | 2797253 | A1 | 29 October 2014 |
| | | | | EP | 4087169 | A1 | 09 November 2022 |
| | | | | ES | 2729309 | T3 | 31 October 2019 |
| | | | | JP | 2015510330 | A | 02 April 2015 |
| | | | | EP | 2797253 | A4 | 12 August 2015 |
| | | | | JP | 5859683 | B2 | 10 February 2016 |
| | | | | EP | 2797253 | B1 | 14 September 2016 |
| | | | | US | 9467984 | B2 | 11 October 2016 |
| | | | | KR | 101690396 | B1 | 27 December 2016 |
| | | | | JP | 6106256 | B2 | 29 March 2017 |
| | | | | CN | 104205710 | B | 31 May 2017 |
| | | | | US | 9730199 | B2 | 08 August 2017 |
| | | | | EP | 3104545 | B1 | 20 September 2017 |
| | | | | US | 9999035 | B2 | 12 June 2018 |
| | | | | EP | 3264660 | B1 | 01 May 2019 |
| | | | | EP | 3264660 | B8 | 26 June 2019 |
| | | | | US | 10492186 | B2 | 26 November 2019 |
| | | | | CN | 107196747 | B | 28 April 2020 |
| | | | | HK | 40006985 | A0 | 29 May 2020 |
| | | | | EP | 3528414 | B1 | 04 November 2020 |
| | | | | US | 10912069 | B2 | 02 February 2021 |
| | | | | EP | 3799343 | B1 | 29 June 2022 |
| | | | | US | 11395276 | B2 | 19 July 2022 |
| CN | 106257856 | A | 28 December 2016 | US | 2021235442 | A1 | 29 July 2021 |
| | | | | EP | 3866369 | A1 | 18 August 2021 |
| | | | | CN | 112615707 | A | 06 April 2021 |
| | | | | US | 2018310298 | A1 | 25 October 2018 |
| | | | | KR | 20180010224 | A | 30 January 2018 |
| | | | | EP | 3311517 | A1 | 25 April 2018 |
| | | | | WO | 2016204585 | A1 | 22 December 2016 |
| | | | | EP | 3311517 | A4 | 27 June 2018 |
| | | | | CN | 106257856 | B | 02 February 2021 |
| | | | | US | 10932236 | B2 | 23 February 2021 |
| CN | 109600847 | A | 09 April 2019 | KR | 20200051044 | A | 12 May 2020 |
| | | | | EP | 3676983 | A1 | 08 July 2020 |

Form PCT/ISA/210 (patent family annex) (January 2015)

29

INTERNATIONAL SEARCH REPORT
Information on patent family members

International application No.

**PCT/CN2022/121309**

| Patent document cited in search report | | | Publication date (day/month/year) | Patent family member(s) | | | Publication date (day/month/year) |
|---|---|---|---|---|---|---|---|
| | | | | US | 2019104515 | A1 | 04 April 2019 |
| | | | | WO | 2019066631 | A1 | 04 April 2019 |
| | | | | IN | 202037017212 | A | 12 June 2020 |
| | | | | EP | 3676983 | A4 | 07 October 2020 |
| | | | | US | 11356987 | B2 | 07 June 2022 |
| WO | 2021137564 | A1 | 08 July 2021 | KR | 20220118299 | A | 25 August 2022 |
| | | | | US | 2022201724 | A1 | 23 June 2022 |
| | | | | EP | 3935771 | A1 | 12 January 2022 |
| | | | | CN | 113132073 | A | 16 July 2021 |
| | | | | EP | 3935771 | A4 | 11 May 2022 |
| WO | 2021004316 | A1 | 14 January 2021 | US | 2022132496 | A1 | 28 April 2022 |
| | | | | KR | 20220028081 | A | 08 March 2022 |
| | | | | EP | 3996312 | A1 | 11 May 2022 |
| | | | | CN | 111835480 | A | 27 October 2020 |
| | | | | CN | 111835480 | B | 19 November 2021 |
| | | | | IN | 202227005204 | A | 17 June 2022 |
| | | | | EP | 3996312 | A4 | 31 August 2022 |
| WO | 2019172624 | A1 | 12 September 2019 | US | 2021368453 | A1 | 25 November 2021 |
| | | | | US | 11412461 | B2 | 09 August 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111130451